# EUROPEAN PATENT APPLICATION

(11) **EP 3 034 713 A1**
(43) Date of publication of application: **22.06.2016**
(21) Application number: 14290386.3
(22) Date of filing: 16.12.2014
(51) Int. Cl.: E04C 2/24, E04C 2/04

(54) **Pre-fabricated construction panels**

(71) Applicant: Siniat International SAS, 84915 Avignon (FR)
(72) Inventor: Soulhat, Julien, 84000 Avignon (FR); Houvenaghel, Geert, 27400 Heudreville-sur-Eure (FR)
(74) Representative: Van Steenlandt, Wim August Maria

(57) **Abstract**

A pre-fabricated construction panel (100, 101) for use on an external surface and/or as part of a building or construction is provided. The panel comprises at least a first layer (110) which is at least partially provided from thermally insulating material. The panel comprises at least a second layer (120, 320) joined to said first layer, this at least second layer being provided from gypsum-based board which is provided with water repellant properties

## Description

### Field of the invention

The present invention relates to pre-fabricated construction panels for use on an external surface and/or as part of a building or construction. The invention further relates to the use of such pre-fabricated construction panels.

### Background of the invention

A pre-fabricated construction panel for use on an external surface and/or as part of a building or construction is disclosed in GB2479023B. The panel comprises a water repellant particulate board.

### Summary of the invention

According to the first aspect of the invention, a pre-fabricated construction panel for use on an external surface and/or as part of a building or construction is provided. The panel comprises at least a first layer which is at least partially provided from thermally insulating material, said panel comprising at least a second layer joined to said first layer, said at least second layer being provided from gypsum-based board which is provided with water repellant properties.

The pre-fabricated construction panel comprises at least one layer which is at least partially provided from thermally insulating material. The term "thermally insulating material" means that a layer of material is used which material has a thermal conductivity (lambda λ) less than or equal to 0.06 W/mK, more preferred in the range of 0.002 to 0.06 W/mK,, more preferring the range of 0.0054 to 0.04 W/mK. This lambda is measured using the method NF EN 12667.

The first layer may be provided completely from thermally insulating material.

The term "water repellant properties" means that the board has a COBB of less than 60 grams, measured according to the method EN520:2009. The water take up of such board with water repellant properties may be less than 2% based upon dry weight measured according to the method measured as per EN520:2009.

According to some embodiments, the pre-fabricated construction panel may comprises a gypsum core, said core comprising gypsum and a hydrophobation agent which is provided for water repellant properties to the gypsum board.

The hydrophobation agent may be any additive material known having hydrophobation properties for plaster. Examples of materials which have been reported as being effective for improving the water-resistant properties of gypsum products are the following: poly(vinyl alcohol), with or without a minor amount of poly(vinyl acetate) ; metallic resinates, - wax or asphalt or mixtures thereof; a mixture of wax and/or asphalt and also cornflower and potassium permanganate; water insoluble thermoplastic organic materials such as petroleum and natural asphalt, coal tar, and thermoplastic synthetic resins such as poly(vinyl acetate), poly(vinyl chloride) and a copolymer of vinyl acetate and vinyl chloride and acrylic resins; a mixture of metal rosin soap, a water soluble alkaline earth metal salt, and residual fuel oil; a mixture of petroleum wax in the form of an emulsion and either residual fuel oil, pine tar or coal tar; a mixture comprising residual fuel oil and rosin; aromatic isocyanates and diisocyanates; silicone derivatives, e.g. organohydrogenpolysiloxanes or silicone oils; clay particles (preferably ones with OH functions) coated with polysiloxane as disclosed in WO-A-0047536, incorporated herein by reference; a wax-asphalt emulsion with or without such materials as potassium sulfate, alkali and alkaline earth aluminates, and Portland cement; a wax-asphalt emulsion prepared by adding to a blend of molten wax and asphalt an oil-soluble, water-dispersible emulsifying agent, and admixing the aforementioned with a solution of casein which contains, as a dispersing agent, an alkali sulfonate of a polyarylmethylene condensation product.

The amounts of water-resistant additives may vary between broad ranges depending on the type of additives, and can be from about 0.05 wt% to about 5 wt%, preferably 0,5 wt% to 3 wt%. Reference weight is the total weight of the gypsum core. In general, the amount of such additives will be such that the core absorbs (in weight) less than about 10%, preferably less than about 7,5% and most preferably less than about 5%, and especially less than about 3% water when tested in accordance with ASTM method C-473. In another embodiment, the same ranges of values apply when tested in accordance with standard EN 520 (method depicted in section 5.9.2)

According to some embodiments, the gypsum board may have a first surface and a second surface, the second surface being used to contact the first layer of the panel, the first surface being provided with a first liner (210), said liner being hydrophobic.

This first liner, providing the first surface of the gypsum board, may be provided in a suitable manner for direct rendering with e.g. cement or plaster or painting. This may be done by brushing or skimming or any other appropriate way of rendering.

According to some embodiments, the first liner may be a web of organic and/or inorganic fibers, impregnated with a hydrophobic slurry.

The hydrophobic slurry may comprise a water-resistant agent. Said water-resistant or repellent agent can be any agent typically used, and can for example be one useful also for the gypsum core. In one embodiment, said water repellent agent is a fluorocarbon repellent or a fluorinated polymer. The amount of said fluorinated compound (on the basis of the dry content) may vary from about 0.1 to about 5 wt%, preferably about 0.3 to about 2 wt%, based on the total weight of the first liner. One example of fluorinated polymer is an acrylic polymer having a pendant (per) fluorinated group having 4 to 20 carbon atoms. Further details may be found in JP 09310284 to OJI.

The web of organic and/or inorganic fibers may comprise glass fibers and /or cellulose fibers and/or synthetic fibers, typically polymeric fibers such as polyamide, polyaramide, polyethylene, polypropylene, polyester fibers and alike.

The joining material used to put the first and second layers of the panel together can be a glue, an adhesive material, fixing devices and/or combinations of these.

According to some embodiments, the gypsum board may have a first surface and a second surface, the second surface being used to contact the first layer of the panel, the second surface being joined to said first layer by means of an adhesive.

The adhesive may be e.g. a hot melt adhesive, or the adhesive may chemically bond to the second surface and the first layer. The adhesive may be a synthetic adhesive scuh as a polyvinyl acetate (PVA) adhesive or an acrylic based adhesive or a polyurethane glue or preferably a magnesium hexafluorosilicate adhesive such as Bostik Aquagrip 22181.

The adhesive may be applied as a layer of adhesive, or the adhesive may be applied locally at discrete points.

The adhesive may be applied as a layer of adhesive, which has preferably a thickness in the range of 0.5 to 5mm, more preferably in the range of 1 to 3 such as in the range of about 2mm.

According to some embodiments, the adhesive may be is a magnesium hexafluorosilicate adhesive.

According to some embodiments, the gypsum board may have a first surface and a second surface, the second surface being used to contact the first layer of the panel, the second surface being provided with a second liner.

This second liner, provided at the second surface of the second layer, may facilitate the adhesion between the second layer and the adhesive used to join the first and the second layer.

Typically suitable gypsum based boards are compliant with EN 520.

According to some embodiments, the thermally insulating material may comprise at least one of expanded polystyrene, polyisocyanurate or polyurethane.

Alternatively or additionally, the thermally insulating material may be a layered material comprising two or more layers of expanded polystyrene (EPS), polyisocyanurate (PIR) or polyurethane (PUR). Optionally the thermally insulating material may be vacuum insulation panels, mineral wool, stonewool, aerogel or alike.

Typically the thickens of the layer provided from thermally insulating material is in the range of 30 to 100mm, more preferably in the range of 20 to 80mm such as in the range of 25 to 70mm, e.g. about 60mm.

The first layer can have a weight in the range from 1 to 5 kg/m², preferably 1.25 to 1.75 kg/m².

The layer provided from thermally insulating material may preferably be expanded polystyrene (EPS), extruded polystyrene (XPS), phenolic foam, polyisocyanurate foam (PIR), polyurethane foam (PUR), vacuum insulation panels

According to some embodiments, the gypsum board has a thickness in the range of 6 to 15 mm.

Typically the thickens of the layer provided from the gypsum board is in the range of 6 to 15mm, more preferably in the range of 7 to 14mm such as in the range of 10 to 13mm, e.g. about 12mm.

The gypsum board hence comprises a gypsum core, which core comprising gypsum, and additives like fungicides, fire retardants, vermiculite, glass fibers, non combustible facers, etc..

The gypsum board may have a dimensional stability characterized by an extension under moisture of less than 0.3mm/m, more preferably less than 0.2 mm/m.

According to some embodiments, the gypsum board comprises a gypsum core, which gypsum core comprises two or more layers of gypsum, which adhere to each other by means of a layer of viscoelastic adhesive.

The pre-fabricated construction panels according to the preset invention, have the advantage that construction workers have less issues with cutting the pre-fabricated construction panels to the required or desired shape, i.e. length and width. Further it is an advantage that, in comparison to the pre-fabricated construction panels of prior art, have a far less weight, hence are more easily to handle and install.

The installation time can hence be reduced significantly, and typically allows easy finishing by simple rendering. The joints between the panels can easily be jointed, using tooling identical as applicable for in-house jointing.

Due to the second layer comprises at least one gypsum-based board, which can be already treated and finished before being joined to the first layer of the panel, no plastering operations may even further needed and installation of the panel is easier as well.

Because the second layer comprises a water repellant material, the panel of the present invention may dispense the application of a .basecoat and reinforced mesh, allowing an additional faster installation of said panel having improved water repellant properties.

By joining together a first layer as mentioned above to a second layer also as mentioned above, the panel of the present invention is easier to handle when comparing with the conventional ones. Moreover, it has as additional advantage the possibility of being shaped in a more easy was in order to fit the dimensions needed.

According to a second aspect of the invention, a use of a pre-fabricated construction panel according to the first aspect of the invention to provide an external surface of a building or construction, is provided.

According to some embodiments, the pre-fabricated construction panel may be joint to the external surface of a building or construction by an adhesive.

Once the -fabricated construction panel is joint to the external surface of a building or construction, the joints can be finished by applying a joint tape as is known to the art of gypsum board constructions. The outer surface of the board may be suitable for direct rendering with e.g. cement or plaster.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 and Fig.3 are schematically views of pre-fabricated construction panels according to the invention.
Fig.2 shows schematically the use of a pre-fabricated construction panel on an external surface of a building or construction.

The same reference signs refer to the same, similar or analogous elements in the different figures.

### Description of illustrative embodiments

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B. Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

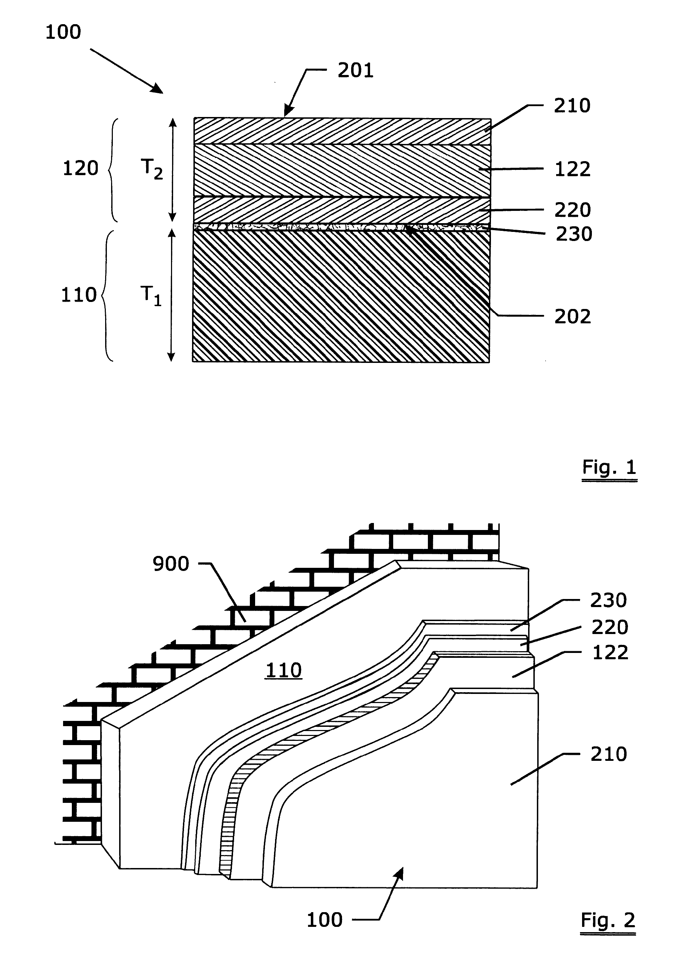

Figure 1 shows a first example of a pre-fabricated construction panel 100 for use on an external surface and/or as part of a building or construction. The panel comprises at least a first layer 110 which is provided from thermally insulating material, being either expanded polystyrene (EPS), extruded polystyrene (XPS), phenolic foam, polyisocyanurate foam (PIR), polyurethane foam (PUR), vacuum insulation panels, or mineral wool or stone-wool or aerogel. The first layer 110 has a thickness T1 of 10 to 160 mm, e.g. 80 mm. The first layer 110 has a weight ranging from 1 to 5 kg/m² typically 1.5 kg/m². It has a thermal conductivity (λ) in the range of 0.06 to 0.003 W/m.K, typically 0.032 W/m.K.

The panel 100 comprises a second layer 120 joined to the first layer 110 by an adhesive layer 230. The adhesive used is a polyvinyl acetate (PVA) adhesive or an acrylic based adhesive or a polyurethane glue or' preferably a magnesium hexafluorosilicate adhesive such as' Bostik Aquagrip 22181.

The second layer 120 is a gypsum board with thickness T2 ranging from 6mm to 15mm, typically 12.5mm , and comprises a gypsum core 122: The gypsum board is compliant to NF EN 520+A1:2009 or to EN 15283-1+A1:2009. The gypsum board has a weight ranging from 5 to 15 kg/m², typically 10 kg/m². The gypsum board has water repellant properties defined by a maximal surface water absorption (measured as per EN520:2009) of 180 g/m², typically 60 g/m² and a maximal total mass absorption (measured as per EN520:2009) of 5%, typically 2%

The gypsum board is provided with a first liner 210, which is made of a non woven mat containing glass fibres, water repellant additives, polymeric binder, and potentially cellulosic fibres

The gypsum board is provided with a second liner 220, which can be similar to the first liner 210, which is made of a non woven mat containing glass fibres, water repellant additives, polymeric binder, and potentially cellulosic fibres (type of mat from Ahlstrom Lystil

The pre-fabricated construction panel 100, as shown in figure 2, is used to cover, as external surface, a wall of a construction 300, such as a brick wall 900.

The pre-fabricated construction panel 100 is bonded to the construction by using an adhesive, such as a base coat adhesive using acrylic polymers compatible with Portland cement, or a polymer-modified dry powder cement-based render mortar in addition to a mechanical fixing, being a one piece metal or plastic fastener with a dish-profiled head for mechanically securing insulated plasterboard panels to walls.

An alternative example of a pre-fabricated construction panel 100, similar to the fist one, comprises a first layer 110 which is provided from acoustically and thermally insulating material, being either expanded polystyrene (EPS), extruded polystyrene (XPS), phenolic foam, polyisocyanurate foam (PIR), polyurethane foam (PUR), vacuum insulation panels, mineral wool or aerogels The first layer 110 has a thickness T1 of 10 to 180 mm, e.g. 100 mm. The first layer 110 has a weight ranging from 1 to 5 kg/m² typically 1.5 kg/m². It has a thermal conductivity (□) in the range of 0.060 to 0.003 W/mK, typically 0.032 w/mK. The first layer 110 has a young modulus, measured as per ISO 9052-1, lower than 0.4 MPa, typically 0.2 MPa. The panel 100 comprises a second layer 120 joined to the first layer 110 by an adhesive layer 230. The adhesive used has special acoustics properties: the adhesive shall have a shear modulus lower than 0.5 MPa, typically 0.1 MPa and a delta tangent higher than 0.3, when measured to ISO 6721. The adhesive used is preferably an acrylic based adhesive.

The second layer 120 is a gypsum board compliant to NF EN 520+A1:2009 or with EN 15283-1+A1:2009. The gypsum board has a weight ranging from 5 to 15 kg/m², typically 10 kg/m². The gypsum board has water repellant properties defined by a maximal surface water absorption (measured as per EN520:2009) of 180 g/m², typically 60 g/m² and a maximal total mass absorption (measured as per EN520:2009) of 5%, typically 2%.

This second example can be mounted and fixer to the construction in the same or similar way as explained for the first example.

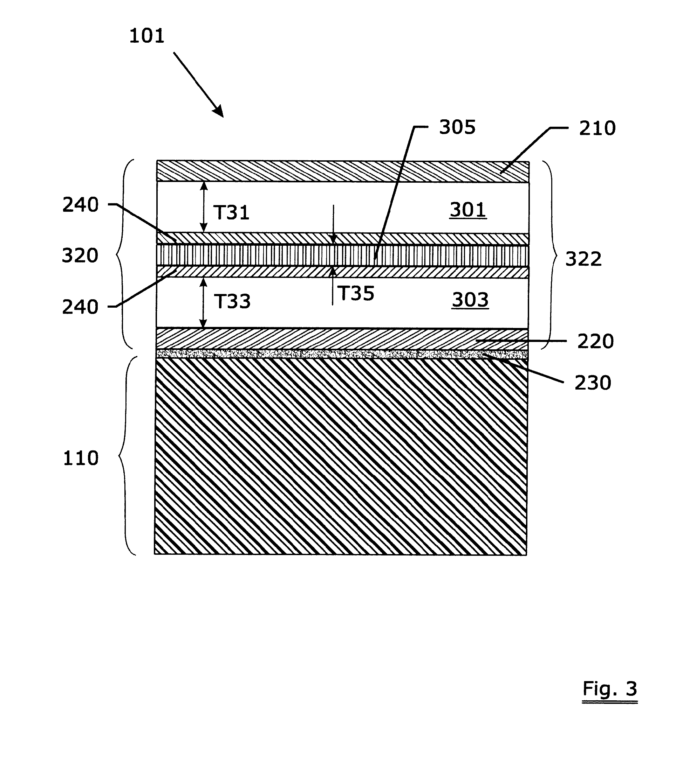

An alternative panel 101 is shown schematically in figure 3. The gypsum core 322 comprises two gypsum boards, indicated 301 and 303, which are adhered one to the other by means of a visco-elastic adhesive 305.

The first gypsum board, 301 has a thickness T31 of 6 mm, 9mm or 12mm preferably 9mm. The second gypsum board, 303 has a thickness T33 of 6 mm, 9mm or 12mm preferably 9mm. The adhesive layer 305 has a thickness T35 lower than 2 mm, typically 0.5mm.

Both gypsum board 301 and 303 are gypsum boards compliant to NF EN 520+A1:2009 or with EN 15283-1+A1:2009. Each gypsum board has a weight ranging from 5 to 15 kg/m², typically 10 kg/m². Each gypsum board has water repellant properties defined by a maximal surface water absorption (measured as absorption (measured as per EN520:2009) of 5%, typically 2%.

Both gypsum board 301 and 303 are provided with a first liner 210, which is made of a non woven mat containing glass fibres, water repellant additives, polymeric binder, and potentially cellulosic fibres.

Both gypsum board 301 and 303 are provided with a second liner 220, which can be similar to the first liner 210, which made of a non woven mat containing glass fibres, water repellant additives, polymeric binder, and potentially cellulosic fibres.

Both gypsum board 301 and 303 are provided with a liner 240 at the side to which the glue 305 is adhering. The liners 240 can be similar to the first liner 210.

The panels 100 and 101 were tested on external masonry walls to upgrade the thermal efficiency of the walls using numerical computation.

It is to be understood that although preferred embodiments and/or materials have been discussed for providing embodiments according to the present invention, various modifications or changes may be made without departing from the scope and spirit of this invention

## Claims

1. A pre-fabricated construction panel (100, 101) for use on an external surface and/or as part of a building or construction, said panel comprises at least a first layer (110) which is at least partially provided from thermally insulating material, said panel comprising at least a second layer (120, 320) joined to said first layer, said at least second layer being provided from gypsum-based board which is provided with water repellant properties.

2. A pre-fabricated construction panel according to claim 1, wherein the gypsum board comprises a gypsum core (122, 322), said core comprising gypsum and a hydrophobation agent which is provided for water repellant properties to the gypsum board.

3. A pre-fabricated construction panel according to claim 1 or 2, wherein the gypsum board has a first surface (201) and a second surface (202), the second surface being used to contact the first layer of the panel, the first surface being provided with a first liner (210), said liner being hydrophobic.

4. A pre-fabricated construction panel according to claim 3, wherein, said first liner (210) is a web of organic and/or inorganic fibers, impregnated with a hydrophobic slurry.

5. A pre-fabricated construction panel according to claim 1 to 4, wherein the gypsum board has a first surface (201) and a second surface (202), the second surface being used to contact the first layer of the panel, the second surface being joined to said first layer by means of an adhesive (230).

6. A pre-fabricated construction panel according to claim 1 to 5, wherein the adhesive (230) is a magnesium hexafluorosilicate adhesive.

7. A pre-fabricated construction panel according to claims 1 to 6, wherein the gypsum board has a first surface (201) and a second surface (202), the second surface being used to contact the first layer of the panel, the second surface being provided with a second liner (220).

8. A pre-fabricated construction panel according to claim 1 to 7, wherein the thermally insulating material (110) comprises at least one of expanded polystyrene, polyisocyanurate or polyurethane.

9. A pre-fabricated construction panel according to claim 1 to 8, wherein the gypsum board (122, 322) has a thickness in the range of 6 to 15 mm.

10. - A pre-fabricated construction panel (101) according to claim 1 to 9, wherein the gypsum board comprises a gypsum core, which gypsum core comprises two or more layers (301, 303) of gypsum, which adhere to each other by means of a layer of viscoelastic adhesive (305).

11. - The use of a pre-fabricated construction panel according to any one of the preceding claims, to provide an external surface of a building or construction.

12. - the use according to claim 11, wherein the pre-fabricated construction panel is joint to the external surface of a building or construction by an adhesive.
